# EUROPEAN PATENT SPECIFICATION

(11) **EP 0 629 578 B1**
(45) Date of publication and mention of the grant of the patent: **30.08.2000**
(21) Application number: 94201732.8
(22) Date of filing: 16.06.1994
(51) Int. Cl.: C01B 3/40

(54) **Process for the catalytic partial oxidation of hydrocarbon**
Verfahren zur katalytischen Teiloxydation von Kohlenwasserstoff
Procédé d'oxydation partielle catalytique d'hydrocarbone

(30) Priority: 18.06.1993 EP 93201768
(43) Date of publication of application: 21.12.1994
(73) Proprietor: SHELL INTERNATIONALE RESEARCH MAATSCHAPPIJ B.V., 2596 HR Den Haag (NL)
(72) Inventor: Jacobs, Ludovicus Leonardus Gerardus, NL-1031 CM Amsterdam (NL); Lednor, Peter William, NL-1031 CM Amsterdam (NL); Vonkeman, Koert Alexander, NL-1031 CM Amsterdam (NL)

(56) References cited:
- EP-A- 0 537 862
- WO-A-92/11199
- US-A- 4 087 259

## Description

The present invention relates to a process for the catalytic partial oxidation of hydrocarbons, in particular a process for the preparation of a mixture of carbon monoxide and hydrogen from methane, natural gas, associated gas or other sources of light hydrocarbons.

The partial oxidation of hydrocarbons, for example methane or natural gas, in the presence of a catalyst is an attractive route for the preparation of mixtures of carbon monoxide and hydrogen, which mixtures are known in the art as synthesis gas. The synthesis gas so-produced may be converted into valuable products, for example hydrocarbon fuels boiling in the middle distillate range, prepared by means of the Fischer-Tropsch synthesis, hydrocarbon waxes, lubricating base oils or methanol.

The optimum catalytic partial oxidation process would give high yields of carbon monoxide and hydrogen at elevated pressures, for example about 30 bar, and very high space velocities, for example of the order of 1,000,000 Nl/l/h. For thermodynamic reasons, in order to obtain high yields of carbon monoxide and hydrogen under these process conditions, it is necessary to operate the partial oxidation process at high temperatures. However, at the high temperatures required in such operation, there exists a major problem in maintaining a high level of catalyst activity and selectivity over the prolonged operation times demanded by a commercial process.

The literature contains a number of documents disclosing details of experiments conducted into the catalytic partial oxidation of hydrocarbons, in particular methane, employing a wide range of catalysts. The majority of these experiments, however, have been conducted under very mild conditions or under conditions wholly unsuited to the operation of a commercial catalytic partial oxidation process.

Thus, European Patent Application publication No. 0 303 438 (EP-A-0 303 438) discloses a process for the catalytic partial oxidation of a hydrocarbonaceous feedstock in which a gaseous mixture of the hydrocarbonaceous feedstock, oxygen or an oxygen-containing gas and, optionally, steam, is introduced into a catalytic partial oxidation zone to contact a catalyst retained therein. The catalyst employed in the process may comprise a wide range of catalytically active components, for example palladium, platinum, rhodium, iridium, osmium, ruthenium, nickel, chromium, cobalt, cerium, lanthanum and mixtures thereof. Further, it is stated in EP-A-0 303 438 that materials not normally considered to be catalytically active may also be employed as catalysts, for example refractory oxides such as cordierite, mullite, mullite aluminium titanate, zirconia spinels and alumina. The catalyst may be of a variety of forms, for example sheets of corrugated metal packed to form elongate channels therethrough or wire mesh. However, preference is given in EP-A-0 303 438 to the use of catalysts in the form of monoliths.

European Patent No. 0 262 947 (EP-B-0 262 947) discloses a process for generating hydrogen by the partial oxidation of a hydrocarbon in which a mixture of the hydrocarbon and oxygen is injected into a mass of a catalyst. The catalyst disclosed in EP-B-0 262 947 comprises platinum and chromium oxide supported on a refractory solid.

D.A. Hickman and L.D. Schmidt ("Synthesis Gas Formation by Direct Oxidation of Methane over Pt Monoliths", Journal of Catalysis 138, 1992, pages 267 to 282) have conducted experiments into the partial oxidation of methane in the presence of catalysts comprising either platinum or rhodium. The catalysts employed were in the form of a polycrystalline platinum foil or rhodium or platinum supported on a ceramic foam carrier. The partial oxidation reactions were conducted at substantially atmospheric pressure and at temperatures in the range of from 600 to 1500 K (337 to 1237°C).

A.T. Ashcroft et al. ("Selective oxidation of methane to synthesis gas using transition metal catalysts", Nature, vol. 344, No. 6264, pages 319 to 321, 22nd March, 1990) disclose the partial oxidation of methane to synthesis gas in the presence of a range of ruthenium-containing catalysts. The objective of the experiments was to establish that the partial oxidation process could be carried out under mild conditions and at low temperatures. To this end, the experiments were conducted with a low gas hourly space velocity of 40,000 /hr, a pressure of 1 atmosphere and a temperature of about 775°C. A single experiment is reported in which elevated pressures were applied. However, in this case, a large excess of methane was used in order to avoid the risk of explosions.

P.D.F. Vernon et al. ("Partial Oxidation of methane to Synthesis Gas", Catalysis Letters 6 (1990) 181-186) disclose a range of experiments in which catalysts comprising nickel, ruthenium, rhodium, palladium, iridium or platinum, either supported on alumina or present in mixed oxide precursors, were applied. Again, the experiments reported are limited to a catalytic partial oxidation process employing only mild operating conditions. As a basis, a set of mild reaction conditions were selected: a pressure of 1 atmosphere, a gas hourly space velocity of 40,000 /hr, a temperature of 1050 K (777°C) and a methane/oxygen ratio of 2.0. From this basis, each of the process parameters was explored. From this study it was concluded that the low temperature operation gave certain operating advantages, but was only practicable at pressures of the order of 1 atmosphere. The authors report the same experiments in "Partial Oxidation of Methane to Synthesis Gas, and Carbon Dioxide as an Oxidising Agent for Methane Conversion", Catalysis Today, 13 (1992) 417-426.

R.H. Jones et al. ("Catalytic Conversion of Methane to Synthesis Gas over Europium Iridate, Eu₂Ir₂O₇", Catalysis Letters 8 (1991) 169-174) report the selective partial oxidation of methane using the europium iridium pyrochlore Eu₂Ir₂O₇. The reaction was studied under the mild conditions of a pressure of 1 atmosphere and a temperature of 873 K (600°C).

J.K. Hockmuth ("Catalytic Partial Oxidation of Methane over a monolith Supported Catalyst", Applied Catalysis B: Environmental, 1 (1992) 89-100) reports the catalytic partial oxidation of methane using a catalyst comprising a combination of platinum and palladium supported on a cordierite monolith body.

United States Patent No. 5,149,464 (US-A-5,149,464) is directed to a method for selectively oxygenating methane to carbon monoxide and hydrogen by bringing the reactant gas mixture at a temperature of about 650°C to 900°C into contact with a solid catalyst which is generally described as being either:
a) a catalyst of the formula MₓM'_{y}O_{z}, where:
   M is at least one element selected from Mg, B, Al, Ln, Ga, Si, Ti, Zr and Hf; Ln is at least one member of lanthanum and the lanthanide series of elements;
   M' is a d-block transition metal,
   and each of the ratios x/y and y/z and (x+y)/z is independently from 0.1 to 8; or
b) an oxide of a d-block transition metal; or
c) a d-block transition metal on a refractory support; or
d) a catalyst formed by heating a) or b) under the conditions of the reaction or under non-oxidising conditions.
The d-block transition metals are said in US-A-5,149,464 to be selected from those having atomic number 21 to 29, 40 to 47 and 72 to 79, the metals scandium, titanium, vanadium, chromium, manganese, iron, cobalt, nickel, copper, zirconium, niobium, molybdenum, technetium, ruthenium, rhodium, palladium, silver, hafnium, tantalum, tungsten, rhenium, osmium, iridium, platinum and gold. It is stated in US-A-5,149,464 that the preferred metals are those in Group VIII of the Periodic Table of the Elements, that is iron, osmium, cobalt, rhenium, iridium, palladium platinum, nickel and ruthenium.

The process described in US-A-5,149,464 is operated at a temperature in the range of from 650°C to 900°C, with a range of from 700°C to 800°C being preferred. A range of experiments are described in US-A-5,149,464 in which a variety of catalysts comprising Group VIII metals were tested, including ruthenium oxide, praseodymium/ruthenium oxides, pyrochlores, ruthenium on alumina, rhodium on alumina, palladium on alumina, platinum on alumina, nickel/aluminium oxide, perovskites and nickel oxide.

A similar general disclosure of a catalyst for use in the catalytic partial oxidation process is made in International Patent Application publication No. WO 92/11199. WO 92/11199 specifically discloses experiments in which catalysts comprising iridium, palladium, ruthenium, rhodium, nickel and platinum supported on alumina were applied. All the experiments were conducted under mild process conditions, with typical conditions being a pressure of 1 atmosphere, a temperature of 1050 K (777°C) and a gas hourly space velocity of about 20,000 /hr. In the text of WO 92/11199 it is stated that extended life tests of the catalysts were underway, but that most catalysts should be expected to show no deterioration in activity after 80 hours, and possible much longer.

As mentioned hereinbefore, to be commercially attractive, a catalytic partial oxidation process should operate at elevated pressures, requiring operating temperatures above those described in the abovementioned documents. A most important factor when considering a catalyst for application in a commercial process, is the stability of that catalyst under the prevailing process conditions. The mild conditions under which the experiments reported in the prior art have been conducted do not provide an insight into the stability of the various catalyst compositions under the severe process conditions needed for commercial implementation. At these severe operating conditions, it has surprisingly been found that a marked difference in the stability of the Group VIII metal catalysts disclosed in the prior art exists. Most surprisingly, contrary to the teaching of WO 92/11199, it has been found that, under commercially applicable conditions, catalysts comprising rhodium, iridium or ruthenium display a significantly higher stability in terms of both selectivity and activity than the remaining Group VIII metal catalysts.

Accordingly, the present invention provides a process for the catalytic partial oxidation of a hydrocarbon feedstock, which process comprises contacting a feed comprising the hydrocarbon feedstock and an oxygen-containing gas at a gas hourly space velocity in the range of from 500,000 to 10,000,000 Nl/l/h, at a pressure in the range of from 3 to 100 bar and a temperature of at least 950°C with a catalyst comprising as a catalytically active metal rhodium, iridium or ruthenium.

The process of the present invention may be used to prepare a mixture of carbon monoxide and hydrogen from any gaseous or hydrocarbon feedstock having a low boiling point. The process is particularly suitable for the partial oxidation of methane, natural gas, associated gas or other sources of light hydrocarbons.

The hydrocarbon feedstock is reacted with an oxygen-containing gas. Air is suitable for use as the oxygen-containing gas. However, the use of substantially pure oxygen as the oxygen-containing gas may be preferred. In this way, the need for handling a large volume of inert gas, for example nitrogen when using air as the oxygen-containing gas, is avoided. The feed may optionally comprise steam.

The feed may comprises the hydrocarbon feedstock and the oxygen-containing gas in an amount to give a suitable oxygen-to-carbon ratio. Preferably, the oxygen-to-carbon ratio is in the range of from 0.3 to 0.8, more preferably from 0.45 to 0.75. References to the oxygen-to-carbon ratio refer to the ratio of oxygen in the form of molecules (O₂) to carbon atoms present in the hydrocarbon feedstock. Preferably, the oxygen-to-carbon ratio is in the range of from 0.45 to 0.65, with oxygen-to-carbon ratios of about the stoichiometric ratio, 0.5, being especially preferred. If steam is present in the feed, the steam-to-carbon ratio is preferably in the range of from above 0.0 to 3.0, more preferably from 0.0 to 2.0. The hydrocarbon feedstock, the oxygen-containing gas and the steam, if present, are preferably well mixed prior to being contacted with the catalyst.

The process of the present invention is operated at elevated pressures, that is pressures significantly above atmospheric pressure. The process may be operated at pressures in the range of from 3 to 100 bar, preferably from 10 to 75 bar.

Under the conditions of high pressure prevailing in the process, it is necessary to allow the feed to contact the catalyst at elevated temperatures in order to achieve the desired high level of conversion. Accordingly, the process is operated at temperatures of at least 950°C. Preferably, the operating temperature is in the range of from 950 to 1300°C, more preferably from 950 to 1200°C. Advantageously, the feed is preheated prior to being contacted with the catalyst.

The feed is provided during the process at gas hourly space velocities in the range of from 500,000 to 10,000,000 Nl/l/hr.

The catalyst employed in the process of the present invention comprises as a catalytically active component a metal selected from rhodium, iridium or ruthenium. Catalysts comprising rhodium are particularly preferred.

The catalytically active metal is most suitably supported on a carrier. Suitable carrier materials are well known in the art and include the refractory oxides such as silica, alumina, titania, zirconia and mixtures thereof. The catalytically active metal may be deposited on the refractory oxide carrier by techniques well known in the art. A most suitable method for depositing the metal on the carrier is impregnation, which method typically comprises contacting the carrier material with a solution of a compound of the catalytically active metal, followed by drying and calcining the resulting material.

Any suitable reaction regime may be employed for the process of the present invention to contact the feed with the catalyst. One suitable reaction regime is a fluidised bed, in which the catalyst is employed in the form of particles. A preferred reaction regime for use in the process is a fixed bed reaction regime, in which the catalyst is retained in the reaction in a fixed arrangement. In the fixed bed regime, the catalyst may again be in the form of particles. Alternatively, the catalyst may have the form of a foam, prepared, for example, by the impregnation of a ceramic foam by the method discussed hereinabove. Suitable ceramic foams for use in the preparation of the catalyst include those having from 30 to 150 pores per inch (12 to 60 pores per centimetre). Further alternative forms for the catalyst include refractory oxide, honeycomb monolith structures and metal gauzes, with the catalytically active metal being deposited on the honeycomb monolith or gauze.

In a preferred embodiment of the process of this invention, the feed is contacted with a catalyst retained in a fixed bed arrangement, which arrangement has a high tortuosity. The term "tortuosity" is a common term in the art which, when referring to a fixed catalyst bed, can be defined as the ratio of the length of the path taken by a gas flowing through the bed to the length of the shortest straight line path through the bed. Thus, the honeycomb monolith structures have a tortuosity of 1.0. For the purposes of the present invention, the term "high tortuosity" is a reference to arrangements having a tortuosity substantially greater than that of the honeycomb monolith structures, in particular a tortuosity of at least 1.1. A fixed bed of catalyst particles typically has a tortuosity of about 1.5, whilst ceramic foams may be prepared having a tortuosity in the range of from 3.0 to 4.0, or even higher. In general, the tortuosity of the fixed bed arrangement is preferably in the range of from 1.1 to about 10.0, more preferably to about 5.0. A most suitable range of tortuosity is from 1.3 to 4.0.

It has been found that by employing the catalyst in a fixed bed arrangement having a high tortuosity allows the required conversion to be achieved with only a relatively very short contact time between the reacting gases and the catalyst. In this way, only a very low volume of catalyst is required, which in turn allows the very high gas space velocities desirable for operating a commercial process to be achieved.

The feed is preferably contacted with the catalyst under adiabatic conditions. For the purposes of this specification, the term "adiabatic" is a reference to reaction conditions in which substantially all heat loss and radiation from the reaction zone is prevented, with the exception of heat leaving in the gaseous effluent stream of the reactor.

In a further aspect, the present invention relates to carbon monoxide or hydrogen whenever prepared by a process as hereinbefore described.

The mixture of carbon monoxide and hydrogen prepared by the process of this invention is particularly suitable for use in the synthesis of hydrocarbons, for example by means of the Fischer-Tropsch synthesis, or the synthesis of oxygenates, for example methanol. Processes for the conversion of the mixture of carbon monoxide and hydrogen into such products are well known in the art.

The process of the present invention is further described by way of the following illustrative examples, in which Examples 1 to 3 each exemplify a process according to the present invention and Examples 4 and 5 are for comparative purposes.

### Example 1

### Catalyst Preparation

12.93 g of an aqueous solution, prepared by dissolving sufficient rhodium trichloride (RhCl₃) in water to give a rhodium concentration of 4.12 % by weight, was concentrated by evaporation to a volume of 3.5 ml. Alpha alumina extrudates (1.0 mm diameter trilobes, commercially available ex. Dycat, 10g) were impregnated by immersion in the aforementioned solution. The resulting extrudates were dried in an oven at a temperature of 120°C and subsequently calcined at a temperature of 500°C. The resulting catalyst comprised 5.0 % by weight rhodium.

### Catalytic Partial Oxidation

A reactor was constructed comprising a transparent sapphire tube. The rhodium-containing catalyst prepared as hereinbefore described was crushed and loaded into the sapphire tube and retained in the form of a fixed bed of catalyst particles having a tortuosity of about 1.5. Methane and oxygen, in sufficient amounts to give an oxygen-to-carbon ratio of 0.52, were thoroughly mixed just before being introduced into the reactor to contact the fixed bed of catalyst. The mixture of methane and oxygen was fed to the reactor at a pressure of 4.5 bar and at a gas hourly space velocity (GHSV) of 2,000,000 Nl/l/hr.

The operating temperature of the catalyst bed was measured by optical pyrometry. The composition of the gas mixture leaving the reactor was determined by gas chromatography and weighing water condensed from the gas stream leaving the reactor. The conversion of methane and the selectivity of the process to carbon monoxide and hydrogen (on the basis of methane converted) was determined. The operating conditions of the reactor and the results of the experiment are summarised in the Table hereinbelow.

### Example 2

Using the same general procedure as described in Example 1, a ruthenium-containing catalyst was prepared by impregnation of the alpha-alumina extrudates using an aqueous solution of hexaamine ruthenium (III) chloride (Ru(NH₃)₆Cl₃). The resulting catalyst comprised 5.0 % by weight ruthenium.

The thus prepared catalyst was loaded into the apparatus and tested for activity in the catalytic partial oxidation of methane using the same general procedure as described in Example 1. The operating conditions of the reactor and the results of the experiment are summarised in the Table hereinbelow.

### Example 3

Using the same general procedure as described in Example 1, an iridium-containing catalyst was prepared by impregnation of the alpha-alumina extrudates using an aqueous solution of chloroiridic acid (H₂IrCl₆). The resulting catalyst comprised 5.0 % by weight iridium.

The thus prepared catalyst was loaded into the apparatus and tested for activity in the catalytic partial oxidation of methane using the same general procedure as described in Example 1. The operating conditions of the reactor and the results of the experiment are summarised in the Table hereinbelow.

### Example 4 Comparative Example

Using the same general procedure as described in Example 1, a platinum-containing catalyst was prepared by impregnation of the alpha-alumina extrudates using an aqueous solution of chloroplatinic acid (H₂PtCl₆). The resulting catalyst comprised 5.0 % by weight platinum.

The thus prepared catalyst was loaded into the apparatus and tested for activity in the catalytic partial oxidation of methane using the same general procedure as described in Example 1. The operating conditions of the reactor and the results of the experiment are summarised in the Table hereinbelow.

### Example 5 Comparative Example

Using the same general procedure as described in Example 1, a palladium-containing catalyst was prepared by impregnation of the alpha-alumina extrudates using an aqueous solution of tetraaminepalladium(II) nitrate (Pd(NH₃)₄(NO₃)₂). The resulting catalyst comprised 5.0 % by weight palladium.

The thus prepared catalyst was loaded into the apparatus and tested for activity in the catalytic partial oxidation of methane using the same general procedure as described in Example 1. The operating conditions of the reactor and the results of the experiment are summarised in the Table hereinbelow.

From the data presented in the Table, it can be seen that, under the conditions of elevated temperature and pressure applied, catalysts comprising rhodium, ruthenium or iridium exhibited very high levels of stability in terms of both the overall conversion of methane and the selectivity to hydrogen and carbon monoxide. None of the catalysts comprising rhodium, ruthenium or iridium exhibited significant losses in activity or selectivity, with the high levels of performence being maintained over the entire runtime of the experiments.

The catalytic partial oxidation reactions were performed using the rhodium-containing catalyst in a further prolonged experiment for a total runtime of 160 hours under the conditions of Example 1, as set out in the Table. No perceptible loss in activity or selectivity of the catalyst was observed.

In contrast, it can be seen that the catalysts comprising platinum and palladium exhibited much poorer levels of stability under the prevailing process conditions, with significant rates of deactivation in both the overall process conversion and selectivity being experienced. The experiments employing both the platinum- and palladium-containing catalysts had to be stopped after the very short runtimes indicated in the Table owing to the formation of coke on the catalyst, leading to a marked increase in the pressure drop across the catalyst bed and a significant rise in the catalyst operating temperature.

**Table**

| Example No. | 1 | 2 | 3 | 4 | 5 |
|---|---|---|---|---|---|
| Active metal | rhodium | ruthenium | iridium | platinum | palladium |
| | | | | | |

| Operating Conditions | | | | | |
|---|---|---|---|---|---|
| Temperature (°C) | 968 | 1000 | 980 | 1060 | 1220 |
| Pressure (bar) | 4.5 | 3.9 | 4.0 | 3.8 | 3.9 |
| GHSV (1000 Nl/l/hr) | 2000 | 2000 | 2000 | 2000 | 2000 |
| oxygen/carbon ratio | 0.52 | 0.52 | 0.52 | 0.52 | 0.52 |
| runtime (hours) | 24 | 24 | 24 | 2 | 2 |
| CH₄ conversion (%) | 81.9 | 73.7 | 77.1 | 66.0 | 60.8 |
| CO selectivity (%)¹ | 91.8 | 80.0 | 84.4 | 70.0 | 69.4 |
| H₂ selectivity (%)² | 90.3 | 88.4 | 89.7 | 83.2 | 76.4 |

| Deactivation (%)³ | | | | | |
|---|---|---|---|---|---|
| CH₄ conversion | <0.1 | <0.1 | <0.1 | 1.7 | 2.5 |
| H₂ selectivity | <0.1 | <0.1 | <0.1 | 1.4 | 2.6 |

| | | | | | |
|---|---|---|---|---|---|
| 1 selectivity to CO based on CH₄ conversion | | | | | |
| 2 selectivity to H₂ based on CH₄ conversion | | | | | |
| 3 deactivation in terms of % performance lost per hour of runtime | | | | | |

## Claims

1. A process for the catalytic partial oxidation of a hydrocarbon feedstock, which process comprises contacting a feed comprising a hydrocarbon feedstock and an oxygen-containing gas at a gas hourly space velocity in the range of from 500,000 to 10,000,000 Nl/l/h, at a pressure in the range of from 3 to 100 bar and a temperature of at least 950°C with a catalyst comprising as a catalytically active metal rhodium, iridium or ruthenium.

2. A process according to claim 1, characterised in that the hydrocarbon feedstock comprises methane, natural gas, associated gas or a source of light hydrocarbons.

3. A process according to either of claims 1 or 2, characterised in that the oxygen-containing gas is substantially pure oxygen.

4. A process according to any preceding claim, characterised in that the feed comprises the hydrocarbon feedstock and the oxygen-containing gas in amounts giving an oxygen-to-carbon ratio of from 0.3 to 0.8, preferably from 0.45 to 0.75, more preferably from 0.45 to 0.65.

5. A process according to any preceding claim, characterised in that the feed is contacted with the catalyst at a pressure in the range of from 10 to 75 bar.

6. A process according to any preceding claim, characterised in that the feed is contacted with the catalyst at a temperature in the range of from 950 to 1300°C, preferably from 950 to 1200°C.

7. A process according to any preceding claim, characterised in that the catalyst comprises rhodium.

8. A process according to any preceding claim, characterised in that the catalyst is retained in a fixed bed arrangement, preferably a fixed bed arrangement having a high tortuosity, more preferably having a tortuosity in the range of from 1.1 to 5.0.

9. A process according to claim 9, characterised in the catalyst is in the form of a ceramic foam impregnated with the catalytically active metal.

10. A process according to any preceding claim, characterised in that the feed is contacted with the catalyst under substantially adiabatic conditions.

## Patentansprüche

1. Verfahren zur katalytischen Partialoxidation eines Kohlenwasserstoffeinsatzmaterials, welches Verfahren ein Inkontaktbringen eines ein Kohlenwasserstoffeinsatzmaterial und ein sauerstoffhältiges Gas umfassenden Einsatzmaterials bei einer Gasraumgeschwindigkeit im Bereich von 500.000 bis 10.000.000 Nl/l/h, einem Druck im Bereich von 3 bis 100 bar und bei einer Temperatur von wenigstens 950°C mit einem Katalysator umfaßt, der als ein katalytisch aktives Metall Rhodium, Iridium oder Ruthenium enthält.

2. Verfahren nach Anspruch 1, dadurch gekennzeichnet, daß das Kohlenwasserstoffeinsatzmaterial Methan, Erdgas, Begleitgas oder eine Quelle leichter Kohlenwasserstoffe umfaßt.

3. Verfahren nach Anspruch 1 oder 2, dadurch gekennzeichnet, daß das sauerstoffhältige Gas im wesentlichen reiner Sauerstoff ist.

4. Verfahren nach einem der vorstehenden Ansprüche, dadurch gekennzeichnet, daß das Einsatzmaterial das kohlenwasserstoffhältige Einsatzmaterial und das sauerstoffhältige Gas in Mengen enthält, die ein Sauerstoff/Kohlenstoff-Verhältnis von 0,3 bis 0,8, vorzugsweise von 0,45 bis 0,75, stärker bevorzugt von 0,45 bis 0,65 ergeben.

5. Verfahren nach einem der vorstehenden Ansprüche, dadurch gekennzeichnet, daß das Einsatzmaterial bei einem Druck im Bereich von 10 bis 75 bar mit dem Katalysator in Kontakt gebracht wird.

6. Verfahren nach einem der vorstehenden Ansprüche, dadurch gekennzeichnet, daß das Einsatzmaterial bei einer Temperatur im Bereich von 950 bis 1.300°C, vorzugsweise von 950 bis 1.200°C, mit dem Katalysator in Kontakt gebracht wird.

7. Verfahren nach einem der vorstehenden Ansprüche, dadurch gekennzeichnet, daß der Katalysator Rhodium enthält.

8. Verfahren nach einem der vorstehenden Ansprüche, dadurch gekennzeichnet, daß der Katalysator in einer Festbettanordnung vorliegt, vorzugsweise in einer Festbettanordnung mit einer hohen Tortuosität, stärker bevorzugt mit einer Tortuosität im Bereich von 1,1 bis 5,0.

9. Verfahren nach Anspruch 8, dadurch gekennzeichnet, daß der Katalysator in Form eines mit dem katalytisch aktiven Metall imprägnierten keramischen Schaums vorliegt.

10. Verfahren nach einem der vorstehenden Ansprüche, dadurch gekennzeichnet, daß das Einsatzmaterial unter im wesentlichen adiabatischen Bedingungen mit dem Katalysator in Kontakt gebracht wird.

## Revendications

1. Procédé pour l'oxydation partielle catalytique d'une charge d'alimentation hydrocarbonée, lequel procédé comprend la mise en contact d'une alimentation comprenant une charge d'alimentation hydrocarbonée et un gaz contenant de l'oxygène à une vitesse spatiale horaire gazeuse dans la gamme de 500.000 à 10.000.000 Nl/l/h, à une pression dans la gamme de 3 à 100 bars et à une température d'au moins 950°C avec un catalyseur comprenant comme métal catalytiquement actif du rhodium, de l'iridium ou du ruthénium.

2. Procédé suivant la revendication 1, caractérisé en ce que la charge d'alimentation hydrocarbonée comprend du méthane, du gaz naturel, un gaz associé ou une source d'hydrocarbures légers.

3. Procédé suivant l'une ou l'autre des revendications 1 et 2, caractérisé en ce que le gaz contenant de l'oxygène est de l'oxygène essentiellement pur.

4. Procédé suivant l'une quelconque des revendications précédentes, caractérisé en ce que l'alimentation comprend la charge d'alimentation hydrocarbonée et le gaz contenant de l'oxygène en des quantités donnant un rapport oxygène à carbone de 0,3 à 0,8, avantageusement de 0,45 à 0,75, plus avantageusement de 0,45 à 0,65.

5. Procédé suivant l'une quelconque des revendications précédentes, caractérisé en ce que l'alimentation est mise en contact avec le catalyseur à une pression allant de 10 à 75 bars.

6. Procédé suivant l'une quelconque des revendications précédentes, caractérisé en ce que l'alimentation est mise en contact avec le catalyseur à une température allant de 950 à 1300°C, avantageusement de 950 à 1200°C.

7. Procédé suivant l'une quelconque des revendications précédentes, caractérisé en ce que le catalyseur comprend du rhodium.

8. Procédé suivant l'une quelconque des revendications précédentes, caractérisé en ce que catalyseur est retenu dans un agencement à lit fixe, avantageusement un agencement à lit fixe présentant une tortuosité élevée, plus avantageusement présentant une tortuosité allant de 1,1 à 5,0.

9. Procédé suivant la revendication 8, caractérisé en ce que le catalyseur est sous la forme d'une mousse céramique imprégnée du métal catalytiquement actif.

10. Procédé suivant l'une quelconque des revendications précédentes, caractérisé en ce que l'alimentation est mise en contact avec le catalyseur sous des conditions essentiellement adiabatiques.
